(19) **Europäisches Patentamt / European Patent Office / Office européen des brevets**

(11) **EP 2 966 594 A1**

(12) **EUROPEAN PATENT APPLICATION**

(43) Date of publication:
**13.01.2016 Bulletin 2016/02**

(51) Int Cl.:
*G06K 9/46* (2006.01)     *G06T 7/00* (2006.01)

(21) Application number: **14306127.3**

(22) Date of filing: **10.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Sorgi, Lorenzo**
  **30655 Hannover (DE)**
• **Dumusc, Gwenael**
  **1422 Grandson (CH)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Method and device for image extraction from a video**

(57)    A method for extracting images from a video and a device configured to perform the method are described. An acquiring unit of the device acquires a video including a plurality of images in which a reference object is captured. An analysing unit analyses features of the reference object in the images of the video. An extracting unit then extracts images from the video based on the analysis of the features.

Fig. 1

**Description**

**FIELD OF THE INVENTION**

The present invention relates to a method and a device for image extraction from a video. The extracted images provide an image dataset required for camera calibration, which is a field that collects algorithms and technologies aimed at the characterization of a mathematical projection model for the image formation process of a camera.

**BACKGROUND OF THE INVENTION**

A camera calibration process in general consists of radiometrical and geometrical stages. The radiometrical calibration is to acquire information on how a camera distorts the luminous properties of a scene, e.g. color and luminance. It plays a fundamental and important role for applications such as astronomical imaging and color processing, but is generally bypassed in most of typical 3D vision applications. The geometrical calibration leads to the estimation of a suitable model for the image formation geometry, namely the camera projection and the optical distortion, and is crucial for most 3D vision applications.

Calibration techniques can be generally classified into self-calibration and object-based calibration methods. Self-calibration attempts to infer the camera model from the transformation of the image appearance under the action of a rigid motion, while object-based calibration relies on a certain a-priori known calibration object [I, II].

The most common object-based techniques assume the availability of images of a specific object, which has a known shape and can be easily detected. The calibration object is captured by a camera from different points of view. This prerequisite eases the collection of an error-free set of correspondences between 3D points and 2D image projections for a subsequent camera calibration procedure [III].

The pioneer technique in this field was proposed by Tsai [IV] and has been followed by a large number of other algorithms, which differentiate from each other for attributes such as the geometry of the calibration object, the features represented on the object surface, the number of required images, the constraints on camera motion and the estimated camera projection model [V]. Among the huge proliferation of calibration algorithms, Zhang's approach [VI] deserves a remark as it has become the basis of many open-source as well as commercial calibration tools. Meanwhile, with a large number of standard solutions, several tools addressing specific problems like fisheye lenses and omnidirectional imaging systems and camera clusters calibration are also available.

Despite the large number of solutions, not much attention has been given to the preliminary processing task of gathering an optimal calibration image dataset from a video, which is actually crucial for and can influence the result and accuracy of the expected camera calibration. In most of the techniques, the task of collecting the image dataset is committed to end users. However, an end user is normally without specific knowledge about how to acquire an optimal image dataset for camera calibration. In addition, many low cost cameras are equipped merely with a minimal interface, sometimes even without a live-view feature, which makes it impossible for a user to control the images actually captured. The manual capture and decision for the image dataset is a tedious and time consuming task especially when a minimal interface is used.

To acquire an optimal calibration image dataset, one essential step is to identify the reference object captured in the given video or images. It is sometimes burdensome and tedious for an operator to perform a manual identification. For example, when a checkerboard is used as the reference object, which is common because of its easily detectable a-priori known geometry, the number of pixel points to be identified is tremendous and the identification result might be poor and thus unreliable.

An alternative to the manual identification is a calibration tool equipped with a fully automatic function for checkerboard corner detection or a light-assisted one, which is nowadays commonly available on the market, e.g. Camera Calibration Toolbox for Matlab, OcamCalib, EasyCamCalib, Omnidirectional Calibration Toolbox, etc. Nevertheless, most of the tools are limited to certain conditions and are not feasible in some cases, e.g. when the calibration object is only partially visible in the images and when highly distorted images are used. Since wide angle lenses introduce a severe nonlinear distortion into the image formation process, all those techniques that assume a roughly regular geometry of the checkerboard pattern would be inevitably infeasible for such cases, especially when a linear homography mapping between the object space and the image space is used for an approximate location of the checker corners. The high curvature of the checkerboard structure on the image indeed makes the corner prediction unreliable.

Another problem is the partial visibility of the calibration object. A strong calibration of a camera system requires a well-spread distribution of the 2D/3D correspondences, namely the source 3D points should span a volume with sufficient extension in depth with respect to the camera location, and the corresponding 2D image projections should cover with approximately equal density the whole retinal plane. This is an essential condition to achieve an accurate estimation of the calibration parameters, which requires a detection system able to cope with partially occluded patterns. In these cases, most of the calibration tools do not support a human interaction for a removal of false detections or for the integration of supplementary data for missed detections.

## SUMMARY OF THE INVENTION

It is an objective of the present invention to propose an improved solution for extracting a calibration image dataset from a video. More specifically, the present invention provides methods and a device for automatic image extraction from a video.

According to the invention, a method for extracting images from a video is introduced. The video includes a plurality of images in which a reference object is captured. The method comprises: acquiring by a device the video; analyzing features of the reference object in the images of the video; and extracting by the device images from the video based on the analysis of the features.

Accordingly, a device configured to extract images from a video is introduced. The device comprises: an acquiring unit configured to acquire the video; an analyzing unit configured to analyze features of the reference object in the images of the video; and an extracting unit configured to extract images from the video based on the analysis of the features.

Also, a computer readable storage medium has stored therein instructions enabling extracting images from a video, which when executed by a computer, cause the computer to: acquire a video including a plurality of images in which a reference object is captured; analyze features of the reference object in the images of the video; and extracting images from the video based on the analysis of the features.

The method of this invention provides an improved solution to automatically acquire a calibration image dataset. Since the method can be performed automatically in a single device, it is time saving and can provide a higher suitability of the extracted image dataset. The images are extracted according to some optimality criteria.

## BRIEF DESCRIPTION OF THE DRAWINGS

For a better understanding the invention shall now be explained in more detail in the following description with reference to the figures. It is understood that the invention is not limited to this disclosed exemplary embodiments and that specified features can also expediently be combined and/or modified without departing from the scope of the present invention as defined in the appended claims. In the figures:

Fig. 1        is a flow chart illustrating one preferred embodiment of the image extraction method according to the present invention.

Fig. 2        is a flow chart illustrating other preferred embodiments of the image extraction method according to the present invention.

Fig. 3        is a flow chart illustrating an exemplary tracking of a reference object according to one exemplary embodiment of the method of this invention.

Fig. 4        shows the tracking results obtained from the exemplary embodiment of the method shown in Fig. 3.

Fig. 5        shows one exemplary measurement for a grid of nodal points implemented in one exemplary embodiment of the method of this invention.

Figs. 6-7     show two implementation examples of the method according to this invention.

Fig. 8        is a flow chart illustrating the checkerboard detection of one exemplary embodiment of the method according to this invention.

Figs. 9-11    show one implementation example of the method for automatic identification of a calibration object according to this invention.

Fig. 12       shows an exemplary result obtained from the implementation example shown in Figs. 9-11.

Fig. 13       is a schematic diagram illustrating a device configured to perform the method according to this invention.

**DETAILED DESCRIPTION OF PREFERRED EMBODIMENTS**

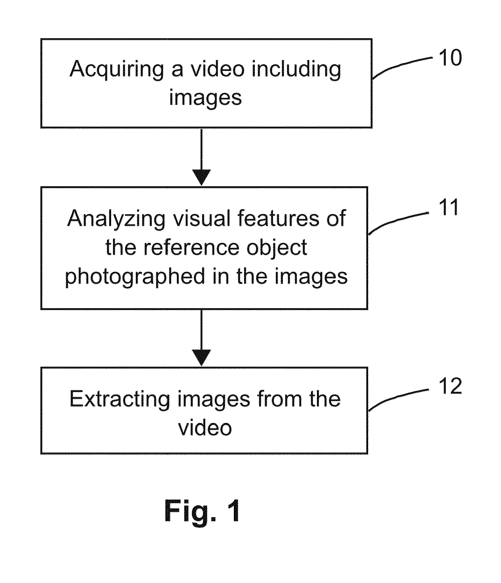

Fig. 1 schematically illustrates a preferred embodiment of the method for extracting images from a video according to the present invention. The method comprises: acquiring 10 a video including a plurality of images in which a reference object is captured; analyzing 11 visual features of the reference object in the images of the video; and extracting 12 images from the video based on the analysis of the features. The method is preferably performed in a single device such as a personal computer, a server, a mobile device, a camera, or the like. In other words, the method is advantageously and automatically conducted by the device without external inputs.

In one preferred embodiment, acquiring 10 the video includes filming the reference object, particularly by a same device which performs the analyzing and extracting steps. In this case, the device is equipped with the functions such as filming and editing a video, and thus can acquire a video or an image sequence by its own. For example, a multi-functional mobile phone or a mobile device can be used for the implementation of this preferred embodiment. Of course, the video can also be acquired from an external device such as a supplementary camera, a database, or any other suitable apparatus. If the captured video is used for a subsequent camera calibration procedure, the same is captured by the camera which is to be calibrated.

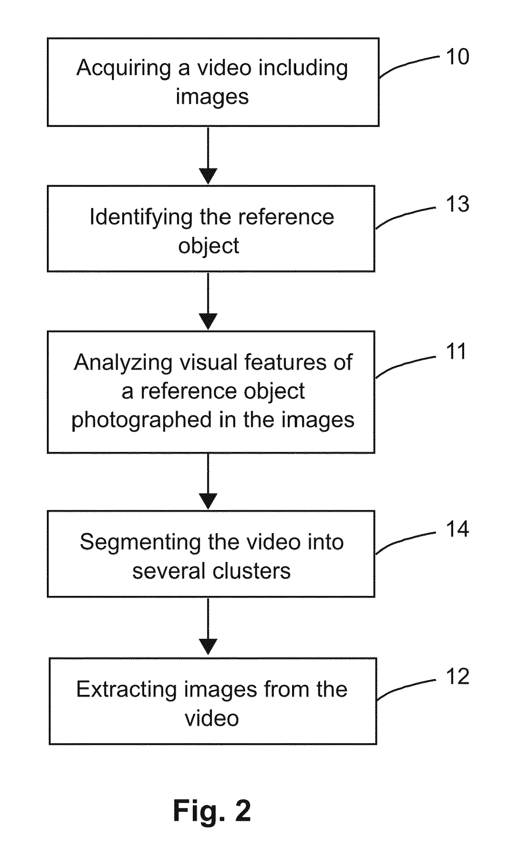

As shown in Fig. 2, in another preferred embodiment, the method further comprises identifying 13 the reference object in the video. The identification 13 of the reference object can be automatically performed by the device or alternatively by a user via a user input.

In yet another preferred embodiment, the method optionally comprises segmenting 14 the video into several clusters each including at least one image. In this embodiment, extracting 12 images from the video includes determining one key image for each of the clusters and then extracting the key images.

In the following one exemplary embodiment of the method of this invention is described in detail. In this embodiment, a video is acquired by capturing a calibration object from various distances and orientations using a camera. A checkerboard is used as the calibration object for this embodiment, while a central checker is defined as the reference object which preferably remains visible across the images of the whole video. Of course, any one of the checkers of the checkerboard can be defined and chosen as the reference object.

In this embodiment, the central checker is identified 13 by a user through a user input by localization of the four corners thereof in a clockwise or a counterclockwise order in the first image of the video. Alternatively, the reference object can be automatically defined by an operation device depending on different situations and demands. More details about automatic identification are given below in an implementation example.

The analysis 11 of the features of the reference object, i.e., the central checker in this embodiment, advantageously comprises temporally tracking the reference object across the images of the video and extracting and analyzing the features of the reference object. In particular, the positions of the four checker corners of the reference checker are tracked and extracted, which are subsequently used to extract four features related to the motion state and visual appearance of the reference object.

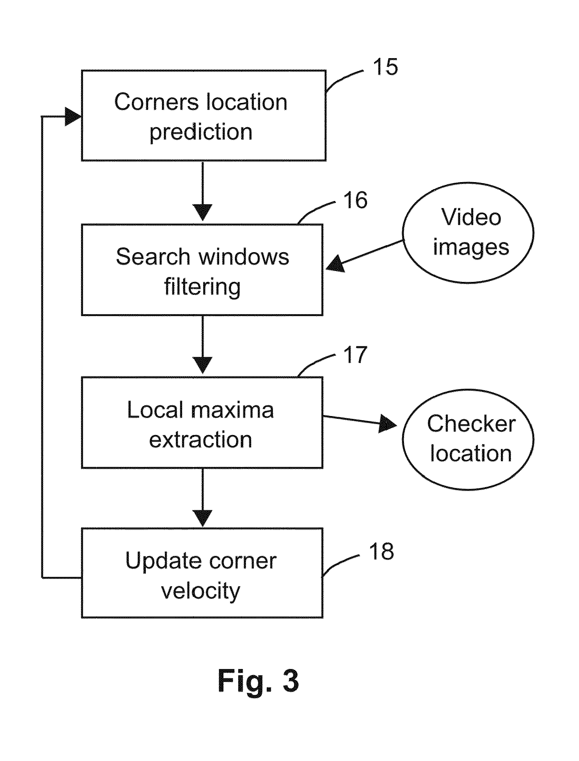

Fig. 3 shows a flowchart illustrating the procedure of an exemplary tracking of the reference checker. First, the locations of the corners of the reference checker are predicted 15. The predicted position, the estimated position and the velocity of the i-th corner in the j-th image of the video are denoted as $(\hat{p}_{i,j}, \tilde{p}_{i,j}, v_{i,j})$. In the first image of the video, the predicted positions are identified via a user interaction or by a device automatically, and the velocity is initialized to zero. Then the tracking of the reference checker proceeds across the successive images using a prediction-measurement scheme. A constant velocity dynamical model is applied to compute the predicted corner locations in the images,

$$\hat{p}_{i,j} = \tilde{p}_{i,j-1} + v_{i,j-1} ,$$

where the velocity is computed as

$$v_{i,j-1} = \tilde{p}_{i,j-1} - \tilde{p}_{i,j-2} .$$

The measurement step is implemented by searching 17 for the local maxima of a cornerness measure within a small search region, denoted as $W_i$, centered on the corner predicted location $\hat{p}_{i,j}$. To compute the cornerness measure, many different solutions are available in the literature. Among them, it is opted in this embodiment for the magnitude of the complex response of the image to the Gauss-Laguerre Circular Harmonic Filter (2,0), denoted as $I_0^2(p)$, since it has been shown to be an effective detector of a checker pattern.

In order to achieve a subpixel accuracy of the corner detection, the center of mass of all pixels with response magnitude higher than a given threshold is computed,

$$\tilde{p}_{i,j} = \frac{\sum_{p \in \Omega} |I_0^2(p)| \, p}{\sum_{p \in \Omega} |I_0^2(p)|}$$

where $\Omega$ denotes the set of pixels fulfilling the condition. In this implementation,

$$th_\Omega = 0.9 \times \max_{p \in W_i}\{\|I_0^2(p)\|\}$$

is used as threshold for the definition of the set $\Omega$.

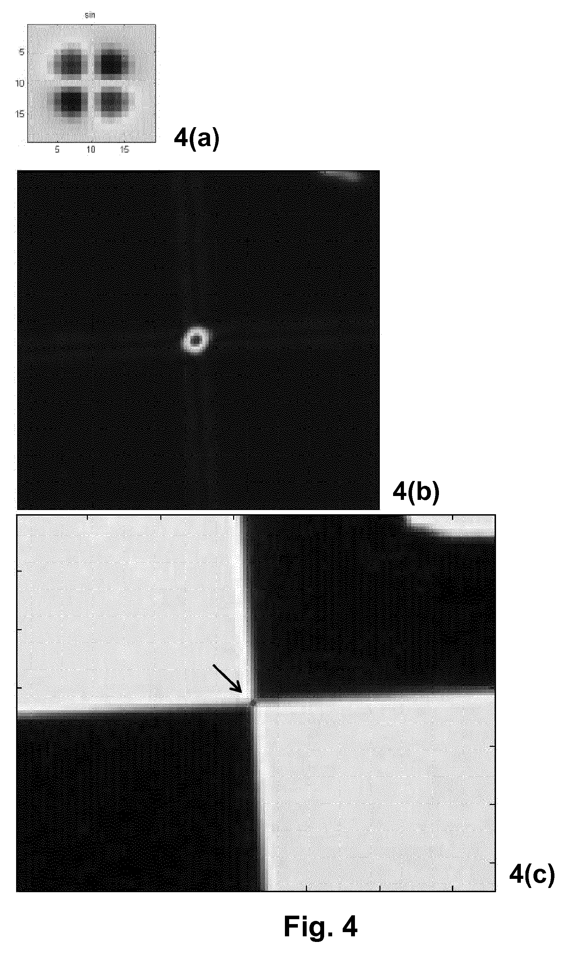

Fig. 4 shows an exemplary result of the tracking of the reference checker, wherein Fig. 4(a) shows the shape of the corner detection filter, Fig. 4(b) shows the magnitude of the response and Fig. 4(c) shows the extracted corner position, which is accurately located at the corner of the checkers.

Subsequently, the temporal tracking of the reference checker is used to compute four quality measures of the reference checker in the images of the video and to populate the calibration image dataset from the video.

The four quality measures are defined according to the features that are preferably retrieved in the final image dataset, namely low speed, slanted and front-to-parallel orientation of the reference object, exhaustive coverage of the image retinal plane with the reference object, and the distance of the reference object from the camera.

The overall measure of the velocity of the reference checker is defined as the sum magnitudes of the velocities of the checker corners:

$$v_j = \sum_{k=1,\dots 4} \|v_{k,j}\|$$

It is assumed that the formula provides an indirect indication of image blur likelihood and, therefore, is used to identify the sharpest images of the video, where the corner localization can reach the highest accuracy.

The second measure deals with the orientation of the reference checker. It is observed that in an ideal case where a camera is not affected by optical distortion, a front-to-parallel configuration maintains the rectangular shape of the checker in the captured images. Therefore, in this embodiment, the projective distortion of the reference checker is defined and taken as an indicator of the relative slant between the camera and the reference object. The distortion measure, denoted as $\theta_j$, is derived from two simple geometrical features, namely the ratio between the checker diagonals and the ratio between the longest and shortest checker side:

$$\theta_j = \min(\theta_{s,j}, \theta_{d,j}), \quad \text{where} \begin{cases} \theta_{s,j} = \dfrac{\min_i\{s_{i,j}\}}{\max_i\{s_{i,j}\}} \\[2ex] \theta_{d,j} = \dfrac{d_j}{D_j} \end{cases}$$

where $d_j$ and $D_j$ are the short and long diagonals, and $s_{i,j}$ is the length of the i-th checker side.

An exhaustive coverage is indeed helpful in order to guarantee a reliable estimation of the camera projection model also in the image periphery. For this purpose, a regular grid of nodal points are denoted as $c_k$ and defined as representatives of the target image areas, and each image is labeled according to the nodal point closest to the reference checker:

$$k_j = \underset{k=1,...,K}{\operatorname{argmin}}\{\|\bar{p}_j - c_k\|\}$$

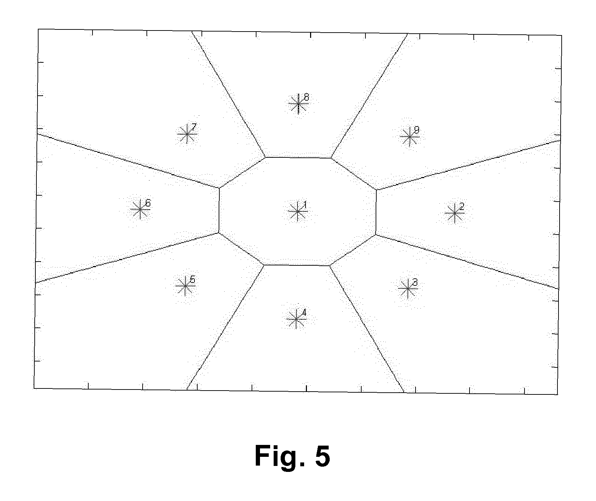

where $\bar{p}_j$ is the geometric center of the reference checker. Fig. 5 shows the grid of nodal points used in this embodiment and also the resulting space partitioning as a Voronoi diagram.

The fourth measure deals with the distance of the reference object from the camera. The area of the central reference checker, denoted as $\sigma_j$, is used as a simple distance indicator. It is reasonable to assume that the bigger the checker is, the closer the reference object is. The area is simply computed using a diagonal to split the checker in two triangles and summing up the corresponding areas.

After the above computation of the four quality measures, the same are analyzed in order to decide which image of the video should be selected and extracted from the given video.

A tridimensional labeling space $L = L_\theta \times L_\sigma \times L_k$ is defined and implemented for the whole given video, where $L_\theta = \{\theta_s, \theta_p\}$ is used to indicate the slanted or front-to-parallel orientation of the reference object, $L_\sigma = \{\sigma_N, \sigma_F\}$ is the distance of the reference object from the camera, and $L_k = \{1,...,K\}$ is the corresponding image region.

The $L_k$ labeling is a relatively simple task as it corresponds to the closest nodal point label $k_j$. The labeling $L_\theta$ and $L_\sigma$ serve as two numerical thresholds that are required to be compared with the distance and distortion measures $\theta_j$ and $\sigma_j$. K-means clustering algorithm is used in this exemplary embodiment, which is aimed to partition the 2D observation vectors $(\theta_j$ and $\sigma_j)$ in $k = 4$ clusters. The cluster centers, needed as algorithm initialization, are provided by the four possible combinations of the extreme values assumed by $\theta_j$ and $\sigma_j$, i.e., four extremities spanned by the scaled measures of $\theta_j$ and $\sigma_j$.

Once the whole acquired video is labeled, the image of the video with lowest velocity is selected and extracted from each cluster of the video. The extracted images then provide the image dataset for subsequent camera calibration process.

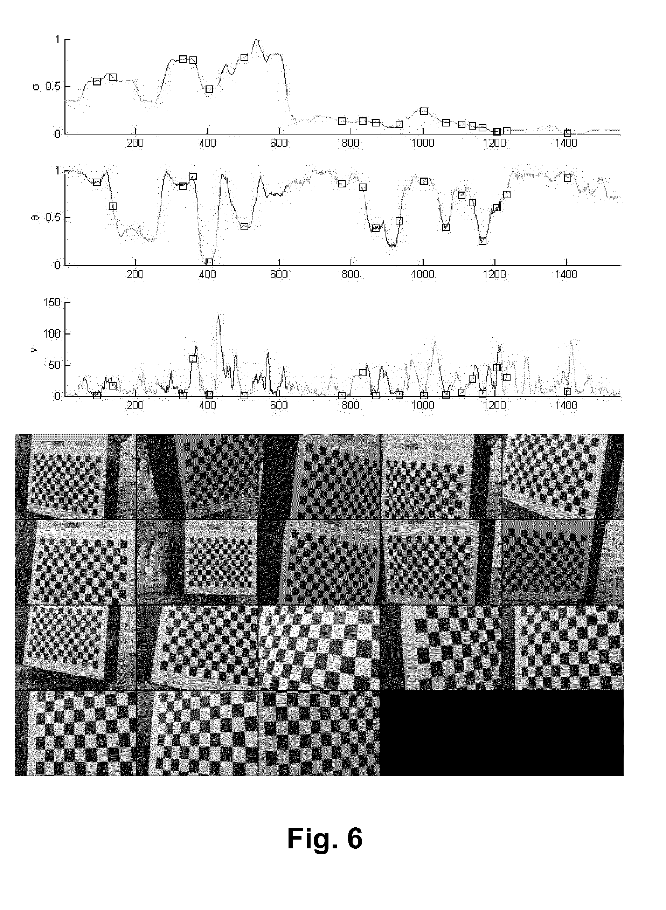

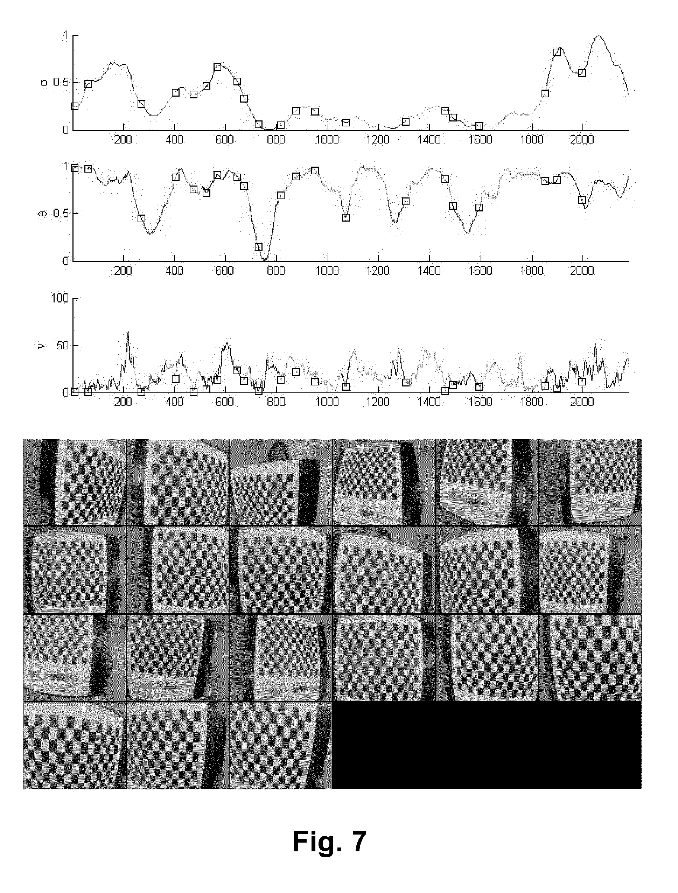

Figs. 6 and 7 show two implementation examples for the above method, where a Panasonic stereo camcorder with normal 50mm-like field of view (Fig. 6) and a GoPro HD Hero2 camera with a 170° wide-angle lens (Fig. 7) are respectively used. The black squares shown in the curve diagrams represent the extracted images which are displayed at the bottom of the respect figures.

In an ideal case, the extracted images from the video should contain a representative for each label combination, in order to meet the requirements regarding the volumetric extension of the virtual calibration structure and the coverage of image retinal plane. This leads to an image dataset with a maximum cardinality of $4 \times K$. In practice, it sometimes occurs that not all labels are represented in the final dataset. However, based on the above exemplary embodiment of the method according to this invention, the extracted image dataset is the one which best meets the suitability requirements, given the available video.

The method of this invention provides an improved solution to automatically acquire a calibration image dataset by a simple and normal device or computer. The initial video input of the method can be easily acquired from a supplementary camera or by a device itself directly without special requirements or limitations, which is also feasible for end consumers. For example, the video can be captured by simply waving a reference object in different orientations and distances in front of a filming camera, where the camera can stand at one fixed position without moving.

Given the video, the method of this invention simplifies the procedure to acquire an image dataset from the video and optimize the dataset suitability for a subsequent camera calibration process. Comparing to typical solutions which acquire an image dataset from a video by manual review and selection of the images from an operator, the method of this invention is time saving and can be widely used in either normal or critical situations such as an outdoor environment where a qualitative visual analysis of a calibration dataset might not be possible.

**Automatic identification of calibration object**

As described above, in the method of this invention, the preliminary identification of the reference object can be advantageously and automatically performed by a device, a computer, or the like. In the following implementation example of the automatic identification, a checkerboard is used as the calibration object.

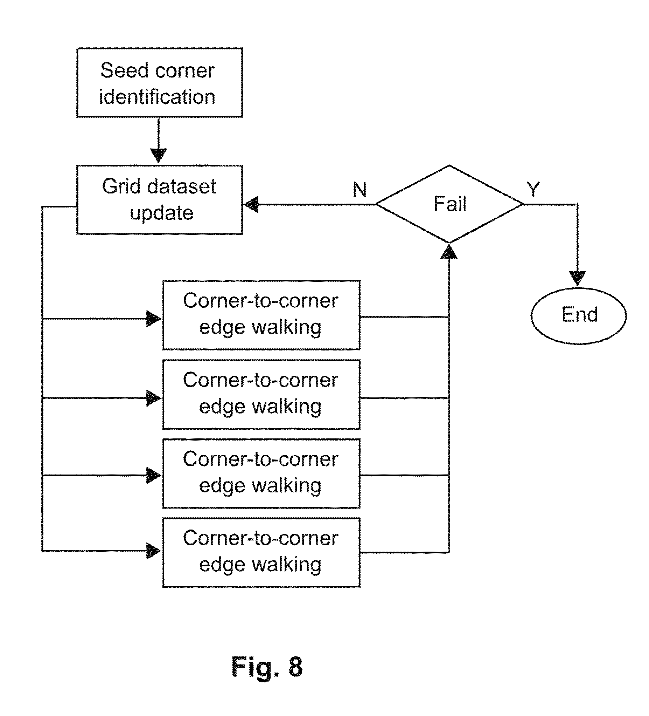

Fig. 8 shows an exemplary procedure of the checkerboard detection in this example. First, the identification of seed corners, e.g. three corners of a central checker, is performed, either by a user via a user input or automatically by a device. This information is used to initialize the reference corner location and the analysis of local velocity in the direction of the grid axis, which represent the seed for the following image exploration. An automatic labeling of the whole set of checkerboard corners is subsequently performed by means of a simple corner extractor integrated within a recursive framework. Essentially, the checkerboard is progressively discovered by walking along the grid edges from corner to corner in the direction of the four connected neighbors. The exploration directions and the labels of the searched corners are completely defined by the information available for the initiating corner. The local response to a pair of circular harmonic filters, which are specifically tailored to edges and corners, is used to update the discovered velocities and to localize the corners with sub-pixel precision. By means of this framework, the geometrical information are propagated from one seed corner, and the set of detected corners is progressively updated using only the local image information, which make the technique insensible to image distortion or partial visibility.

The grid dataset is denoted as $G = \{n_i = [X_i, Y_i, x_i, y_i, v_{iX}, v_{iY}]\}_{i=1,\ldots,N}$, where $N$ is the number of corners, $(X_i, Y_i)$ and $(x_i, y_i)$ are the coordinates of the i-th corner in object and image spaces and $(v_{iX}, v_{iY})$ are the local velocity in $X$ and $Y$ directions, namely the directions in image space towards the next corners $(X_i + 1, Y_i)$ and $(X_i, Y_i + 1)$.

For the identification of seed corners, three corners $(\hat{x}_j, \hat{y}_j)_{j=1,2,3}$ of the reference checker are selected and used to instantiate the seed corners and the local velocities:

$$
\begin{cases}
G = \{n_1\} \\
n_1 = [0, 0, x_1, y_1, v_{1X}, v_{1Y}] \\
(x_1, y_1) = ref(\hat{x}_1, \hat{y}_1) \\
v_{1X} = \dfrac{[\hat{x}_2, \hat{y}_2]^T - [\hat{x}_1, \hat{y}_1]^T}{\|[\hat{x}_2, \hat{y}_2]^T - [\hat{x}_1, \hat{y}_1]^T\|} \\
v_{1Y} = \dfrac{[\hat{x}_3, \hat{y}_3]^T - [\hat{x}_1, \hat{y}_1]^T}{\|[\hat{x}_3, \hat{y}_3]^T - [\hat{x}_1, \hat{y}_1]^T\|}
\end{cases} \tag{1}
$$

where function *ref(.)* identifies the sub-pixel refinement of the corner localization.

Starting from this seed the checkerboard is discovered by recursively calling a corner-to-corner detection method which alternates edge walking and velocity update steps until the next corner is detected or the image border is reached. This recursion is invoked from the calling node in the direction of the corners belonging to the four-connected neighborhood. For example, from a node $n_i$, the search for the corners $(X_i, Y_i+1)$ and $(X_i, Y_i-1)$ is invoked using the velocities $v_{iY}$ and $-v_{iY}$, which is analogously done for the other two connected nodes in the $X$ direction.

The edge walking step is performed in a filtering based context using the Gauss-Laguerre Circular Harmonic Filters (GL-CHF). The set of GL polynomials $\{L_k^n(\rho, \theta); n, k \in N\}$ provides a complex basis suitable for the orthogonal expansion of square integrable functions represented in polar coordinates, under the weighting of a Gaussian window $V(\rho) = e^{-\pi\rho^2}$ [VII]:

$$f(\rho, \theta) V\left(\frac{\rho}{\sigma}\right) = \sum_{n,k} \hat{f}_k^n(\sigma) \frac{1}{\sigma} L_k^n\left(\frac{\rho}{\sigma}, \theta\right)$$

In literature the set of coefficients $\hat{f}_k^n(\sigma)$ is referred as the Gauss Laguerre Transform (GLT) of $f(\rho, \theta)$ at scale $\sigma$ and is obtained by projection of $f(\rho,\theta)$ onto the basis provided by the Gaussian-weighted GL polynomials. Equivalently, in the case of digital images, the GLT can be obtained by filtering through a bank of GL-CHFs.

The GLT provides a representation of an image as a stack of sub-bands, and the first of which are selectively tuned on different low level features, such as corners, borders or lines. In particular, the sub-bands $\hat{f}_0^1$ and $\hat{f}_0^2$ may be acounted as edgeness and cornerness maps and are used for the edge walking and the corner localization in this implementation example.

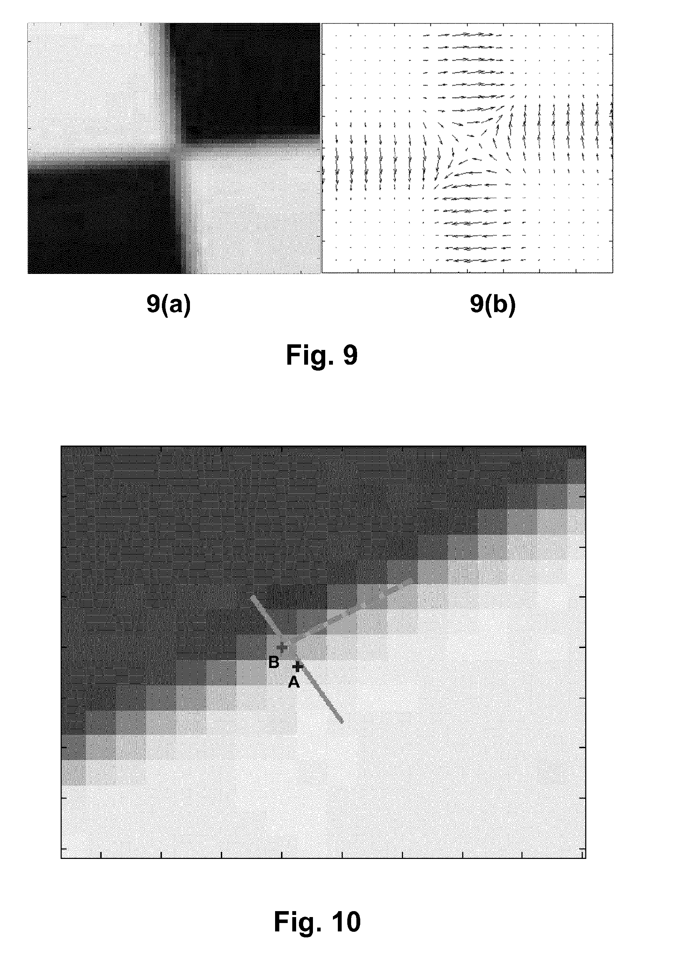

The high selectivity of the GL-CHFs to specific image features suggests the possibility to exploit the local response $\hat{f}_0^1(x)$ to follow an edge between two consecutive corners. Indeed, the magnitude of the local response supports the edge localization and provides an estimate for its local direction [VIII]. Fig. 9(a) shows a sample template of a checker corner of a checkerboard, and Fig. 9(b) shows the magnitude and phase of the edgeness map extracted from the sample template of Fig. 9(a) using GL-CHFs techniques. Since the edges are not straight on the image plane due to distortion introduced by the optical system, the edge walking is performed by iteratively taking short steps and updating the the edge direction according to the local response $\hat{f}_0^1(x)$.

Given the current edge position $p = (x,y)$, a step is taken in the direction of the local velocity $v_p$. The predicted edge location $p' = p + \delta v_p$ is used to identify a segment denoted as L and orthogonal to the edge itself. Along this segment, the pixel with the highest edgeness magnitude is selected and the local velocity is update according to the local phase of $\hat{f}_0^1(x)$:

$$\begin{cases} p^+ = \arg\max_{p \in L} \left\| \hat{f}_0^1(p) \right\| \\ v_{p^+} \leftarrow \dfrac{\pi}{2} + \angle(\hat{f}_0^1(p^+)) \end{cases}$$

Fig. 10 illustrates an exemplary graphic for the above step. The point A represents the location $p'$ of the edge predicted using the current velocity estimate. From this point a search 1D space (the solid line) segment is inspected in order to refine the edge location by searching for the maximum of the local edgeness map (point B). The local velocity is updated using the phase of the local edgeness map. The edge is travelled until the update of the direction of the local velocity exceeds a given threshold. This happens when a corner is crossed, as the inversion of the checker colors determines a rotation of approximate $\pi$ radians in the phase of the filter response.

Once the edge walking termination condition is met, the corner location is locally refined using the cornerness map $\hat{f}_0^2(x)$. The corner candidates are extracted by searching for the local maxima of the cornerness map within a small neighborhood of the current edge location. In highly distorted images and in particular in the peripheral areas, it may happen that a set of multiple candidates is detected, from which only the most likely ones are retained. For this purpose, the distribution of the edgeness map around each corner candidate is inspected and the coherence with the grid topology is measured.

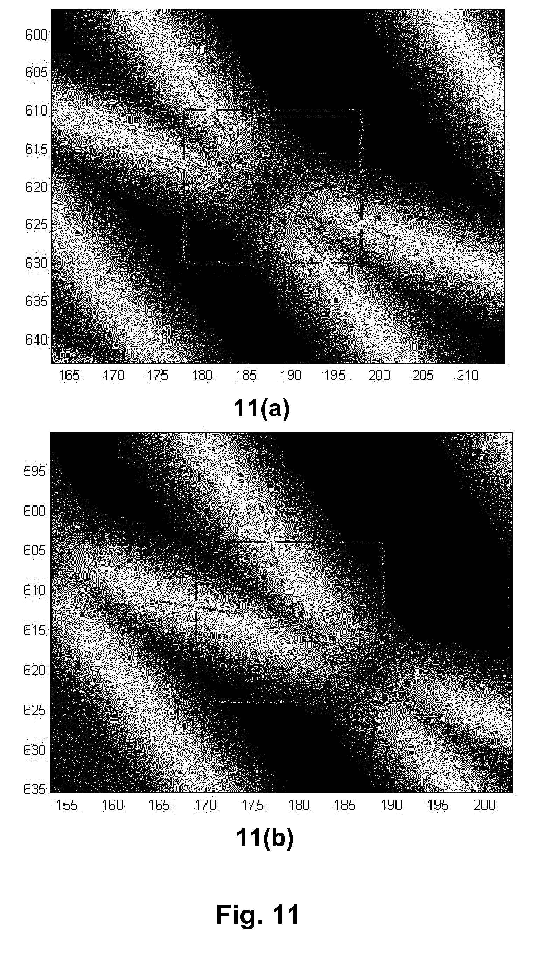

The set of corner candidates is denoted as $C = \left\{ c_j \right\}_{j=1,...,N_C}$, with $\Gamma_i$ denoted as the closed square contour centered on each corner candidate and $D_j = \left\{ m_{j,k} \in \Gamma_j \right\}_{k=1,\ldots,K_j}$ is the set of local maxima of the edgeness map detected on the same contour. If the candidate is correctly centered on the checkerboard corner, the set of velocities directly sampled from the edgeness on the location given by $D_j$ should be aligned with the directions analytically defined by the coordinate of the points in a same set $D_j$, which is schematically shown in Fig. 11(a).

Following the above assumption, a quality measure $q$ is defined for each corner candidate:

$$\begin{cases} q_j = \min_{k=1,\ldots,K_j} \left\{ 1 - \left| \langle v_{j,k}, \hat{v}_{j,k} \rangle \right| \right\} \\ \hat{v}_{j,k} = \dfrac{m_{j,k} - c_j}{\left\| m_{j,k} - c_j \right\|} \\ v_{j,k} = \dfrac{\hat{f}_0^1(m_{j,k})}{\left| \hat{f}_0^1(m_{j,k}) \right|} \end{cases}$$

The candidate with the highest score is selected. To achieve a sub-pixel accuracy of the pixel position, an elliptical paraboloid is fitted using a 3x3 window centered on the selected candidate and the local minima are analytically computed. This simple refinement step is introduced as described above in (1) with the notation *ref* (.).

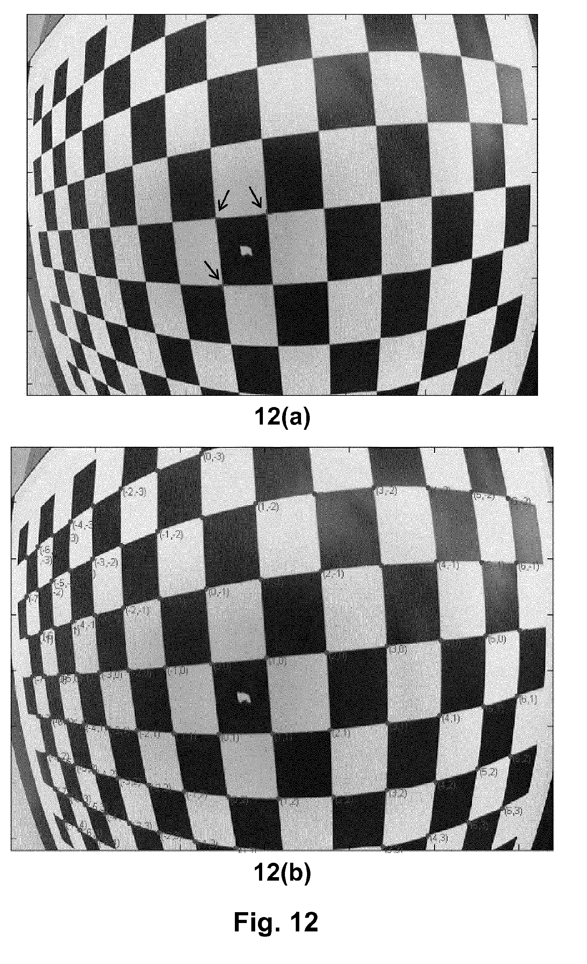

Fig. 12 shows an exemplary result of this implementation example for automatic identification of a checkerboard. Fig. 12(a) shows the identification of the seed corners and Fig. 12(b) shows the final result of the checkerboard identification. The images are captured using a GO-PRO Hero camera which is equipped with a very wide angle lens able to operate in two different configurations, 120° and 170° field of view. The latter, i.e., the narrowest configuration, is used in this implementation example.

It can be seen that the checker corners are accurately identified, even including those located close to the image border. In addition, even though the captured checkerboard is severely distorted due to the wide angle lens and is only partially visible, the detection and identification of the checkerboard are still reliable. The missed detection rate of the checker corners is highly reduced, contributing to a superior collection of 2D/3D correspondences in subsequent camera calibration procedures. In other words, the automatic identification technique can automate the creation of the 2D/3D correspondences dataset and is suitable for exploitation with a wide range of lenses, from the regular field of view up to very wide-angle fisheye lenses and full panoramic catadioptric systems.

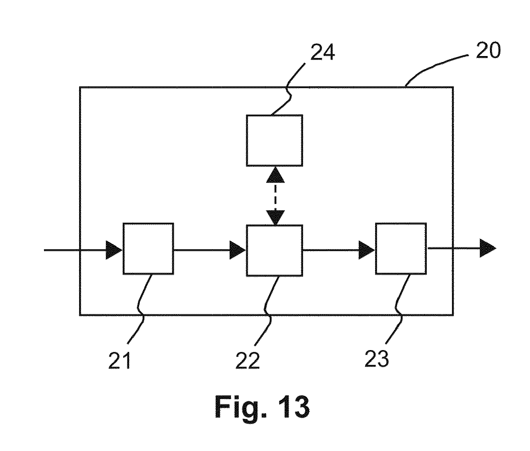

Fig. 13 schematically shows a device 20 configured to perform the method of image extraction from a video according to the present invention. The device 20 comprises an acquiring unit 21 configured to acquire a video; an analyzing unit 22 configured to analyze features of a reference object captured in the images of the video; and an extracting unit 23 configured to extract images from the video based on the analysis of the features.

Preferably, the acquiring unit 21 is configured to film a reference object. More preferably, the analyzing unit 22 is configured to identify the reference object and segment the video into several clusters each including at least one image, and the extracting unit 23 is configured to determine one key image for each of the clusters and extract the key images. Optionally, the device 20 further comprises a user input unit 24 configured to receive a user input for identifying the reference object captured in the images of the given video.

REFERENCES

[I] D. Liebowitz, "Camera Calibration and Reconstruction of Geometry from Images," D.Phil. thesis, University of Oxford, 2001

[II] E. Hemayed, "A survey of camera self-calibration," Proceedings of IEEE Conference on Advanced Video and Signal Based Surveillance, pp.351-357, 2003

[III] R. Hartley and A. Zisserman, Multiple view Geometry in Computer Vision (2 ed.). Cambridge University Press, New York, NY, USA, 2003

[IV] R.Y. Tsai, "An Efficient and Accurate Camera Calibration Technique for 3D Machine Vision," Proceedings of IEEE Conference on Computer Vision and Pattern Recognition, pp. 364-374, 1986

[V] J. Salvi, X. Armangué and J. Batlle, "A comparative review of camera calibration methods with accuracy evaluation," Pattern Recognition, Vol. 35, Issue 7, pp. 1617-1635, 2002

[VI] Z. Zhang, "A flexible new technique for camera calibration." IEEE Transactions on Pattern Analysis and Machine Intelligence, 22(11):1330-1334, 2000

[VII] G. Jacovitti, A. Neri, "Multiresolution circular harmonic decomposition", IEEE Transactions on Signal Processing, 48(11):3242-3247, 2000

[VIII] L. Sorgi, "Edgelet tracking using Gauss-Laguerre Circular Harmonic filters". ICIP 2011: 2897-2900, 2009

**Claims**

1. A method for extracting images from a video including a plurality of images in which a reference object is captured, the method comprising:

   - acquiring (10) the video;
   - analyzing (11) features of the reference object in the images of the video; and
   - extracting (12) images from the video based on the analysis of the features.

2. The method of claim 1, wherein acquiring (10) the video includes filming the reference object.

3. The method of claims 1 or 2, further comprising identifying (13) the reference object in the video.

4. The method of claim 3, wherein identifying (13) the reference object includes using Gauss-Laguerre Circular Harmonic Filters.

5. The method of claims 1 or 2, wherein analyzing (11) features of the reference object includes tracking the reference object across the images of the video and extracting features of the reference object.

6. The method of claims 1 or 2, further comprising segmenting (14) the video into clusters each including at least one image.

7. The method of claim 6, wherein extracting (12) images from the video includes determining one key image for each of the clusters and extracting the key images.

8. The method of claims 1 or 2, wherein analyzing (11) features of the reference object includes analyzing the features related to the visual appearance of the reference object.

9. The method of claims 1 or 2, wherein the reference object includes a checker of a planar checkerboard, and the features of the reference object include velocity and orientation of the checker.

10. A device (20) configured to extract images from a video including a plurality of images in which a reference object is captured, the device comprising:

    - an acquiring unit (21) configured to acquire (10) the video;
    - an analyzing unit (22) configured to analyze (11) features of the reference object in the images of the video; and
    - an extracting unit (23) configured to extract (12) images from the video based on the analysis of the features.

11. The device of claim 10, wherein the acquiring unit (21) is configured to film the reference object.

12. The device of claim 10, wherein the analyzing unit (22) is configured to identify the reference object and segment the video into clusters each including at least one image.

13. The device of claim 12, wherein the extracting unit (23) is configured to determine one key image for each of the clusters and extract the key images.

14. The device of claim 10, further comprising a user input unit (24) configured to receive a user input for identifying the reference object.

15. A computer readable storage medium having stored therein instructions enabling extracting images from a video, which when executed by a computer, cause the computer to:

    - acquire a video including a plurality of images in which a reference object is captured;
    - analyze features of the reference object in the images of the video; and
    - extracting images from the video based on the analysis of the features.

Acquiring a video including images — 10

Analyzing visual features of the reference object photographed in the images — 11

Extracting images from the video — 12

**Fig. 1**

Acquiring a video including images — 10

Identifying the reference object — 13

Analyzing visual features of a reference object photographed in the images — 11

Segmenting the video into several clusters — 14

Extracting images from the video — 12

# Fig. 2

**Fig. 3**

4(a)

4(b)

4(c)

Fig. 4

**Fig. 5**

Fig. 6

Fig. 7

```
Seed corner
identification
        │
        ▼
Grid dataset ◄──── N ◄── Fail ──► Y
  update                              │
   ▲                                  ▼
   │    Corner-to-corner            End
   ├──► edge walking
   │
   │    Corner-to-corner
   ├──► edge walking
   │
   │    Corner-to-corner
   ├──► edge walking
   │
   │    Corner-to-corner
   └──► edge walking
```

**Fig. 8**

9(a)                                    9(b)

## Fig. 9

## Fig. 10

**11(a)**

**11(b)**

**Fig. 11**

12(a)

12(b)

Fig. 12

**Fig. 13**

Europäisches
Patentamt

European
Patent Office

Office européen
des brevets

# EUROPEAN SEARCH REPORT

Application Number

EP 14 30 6127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUSKOV I: "Efficient tracking of regular patterns on non-rigid geometry", PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 2, 11 August 2002 (2002-08-11), pages 1057-1060, XP010614062, DOI: 10.1109/ICPR.2002.1048487 ISBN: 978-0-7695-1695-0 * Section 3 * * Section 4 * * Section 6; figure 1 * | 1-3,8, 10,11, 14,15 | INV. G06K9/46 G06T7/00 |
| X | MUEHLICH M ET AL: "Design and Implementation of Multisteerable Matched Filters", IEEE TRANSACTIONS ON PATTERN ANALYSIS AND MACHINE INTELLIGENCE, IEEE COMPUTER SOCIETY, USA, vol. 34, no. 2, 1 February 2012 (2012-02-01), pages 279-291, XP011470887, ISSN: 0162-8828, DOI: 10.1109/TPAMI.2011.143 * Section 4.1; figures 2, 4 * * Section 6.2 * | 1-4,8, 10,11, 14,15 | TECHNICAL FIELDS SEARCHED (IPC) G06K G06T |

-/--

~~The present search report has been drawn up for all claims~~

| Place of search | Date of completion of the search | Examiner |
|---|---|---|
| The Hague | 2 October 2014 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 6127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LORENZO SORGI: "Edgelet tracking using Gauss-Laguerre Circular Harmonic filters", IMAGE PROCESSING (ICIP), 2011 18TH IEEE INTERNATIONAL CONFERENCE ON, IEEE, 11 September 2011 (2011-09-11), pages 2897-2900, XP032080270, DOI: 10.1109/ICIP.2011.6116264 ISBN: 978-1-4577-1304-0 * Section 1 * * Section 2 * * Section 4 * | 1-4,8, 10,11, 14,15 | |
| X | A. NERI ET AL: "Maximum Likelihood Localization of 2-D Patterns in the Gauss-Laguerre Transform Domain: Theoretic Framework and Preliminary Results", IEEE TRANSACTIONS ON IMAGE PROCESSING, vol. 13, no. 1, 1 January 2004 (2004-01-01), pages 72-86, XP055142813, ISSN: 1057-7149, DOI: 10.1109/TIP.2003.818021 * Section II * | 1-4,8, 10,11, 14,15 | |
| | | | **TECHNICAL FIELDS SEARCHED** (IPC) |
| X | SKIBBE H ET AL: "Fast Rotation Invariant 3D Feature Computation Utilizing Efficient Local Neighborhood Operators", IEEE TRANSACTIONS ON PATTERN ANALYSIS AND MACHINE INTELLIGENCE, IEEE COMPUTER SOCIETY, USA, vol. 34, no. 8, 1 August 2012 (2012-08-01), pages 1563-1575, XP011490700, ISSN: 0162-8828, DOI: 10.1109/TPAMI.2011.263 * Section 3.1 * | 1-4,8, 10,11, 14,15 | |

-/--

~~The present search report has been drawn up for all claims~~

| Place of search | Date of completion of the search | Examiner |
|---|---|---|
| The Hague | 2 October 2014 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 14 30 6127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | L. SORGI ET AL: "Keypoints Selection in the Gauss Laguerre Transformed Domain", PROCEDINGS OF THE BRITISH MACHINE VISION CONFERENCE 2006, 1 January 2006 (2006-01-01), pages 56.1-56.9, XP055143827, DOI: 10.5244/C.20.56 ISBN: 978-1-90-172532-2 * Section 3 * * Section 4 * ----- | 1-4,8, 10,11, 14,15 | |

TECHNICAL FIELDS
SEARCHED      (IPC)

~~The present search report has been drawn up for all claims~~

| Place of search | Date of completion of the search | Examiner |
|---|---|---|
| The Hague | 2 October 2014 | Boltz, Sylvain |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

................................................................

& : member of the same patent family, corresponding
 document

EPO FORM 1503 03.82 (P04C01)

Europäisches
Patentamt

European
Patent Office

Office européen
des brevets

---

**CLAIMS INCURRING FEES**

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

**LACK OF UNITY OF INVENTION**

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 8, 10, 11, 14, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 14 30 6127

The Search Division considers that the present European patent application does not comply with the requirements of unity of invention and relates to several inventions or groups of inventions, namely:

1. claims: 1-4, 8, 10, 11, 14, 15

   Detection of a reference object (not limited to patterns adapted for calibration) in a video, using Gauss-Laguerre Circular Harmonic Filters.
   ---

2. claims: 5, 9

   Tracking of a planar checkerboard in a video. Features used for tracking are the orientation and velocity of the checkerboard.
   ---

3. claims: 6, 7, 12, 13

   Object detection in a video where the video is clustered into multiple shots, each shot including at least one image of the detected object.
   ---

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Camera Calibration and Reconstruction of Geometry from Images. **D. LIEBOWITZ.** D.Phil. thesis. University of Oxford, 2001
- **E. HEMAYED.** A survey of camera self-calibration. *Proceedings of IEEE Conference on Advanced Video and Signal Based Surveillance,* 2003, 351-357
- Multiple view Geometry in Computer Vision. **R. HARTLEY ; A. ZISSERMAN.** Multiple view Geometry in Computer Vision. Cambridge University Press, 2003
- **R.Y. TSAI.** An Efficient and Accurate Camera Calibration Technique for 3D Machine Vision. *Proceedings of IEEE Conference on Computer Vision and Pattern Recognition,* 1986, 364-374
- **J. SALVI ; X. ARMANGUÉ ; J. BATLLE.** A comparative review of camera calibration methods with accuracy evaluation. *Pattern Recognition,* 2002, vol. 35 (7), 1617-1635
- **Z. ZHANG.** A flexible new technique for camera calibration. *IEEE Transactions on Pattern Analysis and Machine Intelligence,* 2000, vol. 22 (11), 1330-1334
- **G. JACOVITTI ; A. NERI.** Multiresolution circular harmonic decomposition. *IEEE Transactions on Signal Processing,* 2000, vol. 48 (11), 3242-3247
- **L. SORGI.** Edgelet tracking using Gauss-Laguerre Circular Harmonic filters. *ICIP 2011,* 2009, 2897-2900